# EUROPEAN PATENT SPECIFICATION

(11) **EP 4 230 460 B1**
(45) Date of publication and mention of the grant of the patent: **02.04.2025**
(21) Application number: 23156491.5
(22) Date of filing: 14.02.2023
(51) Int. Cl.: F16H 3/50, B60K 17/04, F16H 3/54

(54) **WHEEL HUB FOR AN AXLE OF A VEHICLE COMPRISING AN IMPROVED INTEGRATED REDUCTION SYSTEM**
RADNABE FÜR EINE FAHRZEUGACHSE MIT VERBESSERTEM INTEGRIERTEM REDUKTIONSSYSTEM
MOYEU DE ROUE POUR UN ESSIEU DE VÉHICULE COMPRENANT UN SYSTÈME DE RÉDUCTION INTÉGRÉ AMÉLIORÉ

(30) Priority: 16.02.2022 IT 202200002885
(43) Date of publication of application: 23.08.2023
(73) Proprietor: IVECO S.P.A., 10156 Torino (IT)
(72) Inventor: PEREIRA DE LEMOS, José Francivaldo, 10156 Torino (IT)
(74) Representative: Studio Torta S.p.A.

(56) References cited:
- WO-A1-2016/110823
- WO-A1-2021/165913
- FR-A- 1 597 388

## Description

### TECHNICAL FIELD

The invention relates to a wheel hub for an axle of a vehicle, in particular a wheel hub for an axle of a heavy vehicle comprising a reduction system integrated in the hub.

### KNOWN STATE OF THE ART

As it is known, in a wheel vehicle provided with at least one internal combustion engine, reducing the torque coming from the driving shaft relative to the axles of the vehicle is essential.

As it is further known, vehicles are normally provided with a differential gear assembly, which is configured to differentiate the torque coming from the driving shaft between a pair of axle shafts of the axle, due to known reasons of dynamics while driving the vehicle.

The aforementioned torque reduction is normally carried out by means of known gearbox devices arranged between the driving shaft and the aforesaid differential gear assembly.

However, in case of heavy vehicles, these reduction gears are insufficient, in terms of number, to be able to provide a suitable reduction ratio between the torque of the driving shaft and the torque delivered to the wheels of the axle in the different load conditions.

Indeed, it is clear that a heavy vehicle, such as a truck, has to bear a significant weight difference between the unloaded condition and the maximum load condition and, hence, the highest gears are not necessarily the most suited ones for the unloaded condition of the vehicle.

To this aim, reduction systems are known, which are integrated in the wheel hubs. However, these systems require further improvements in order to increase their efficiency.

Furthermore, known reduction systems do not allow the gears contained therein to be engaged while the vehicle is running, which means that the vehicle needs to be stopped, with a consequent increase in unproductive times.

Known reduction systems are disclosed in publications WO2016/110823 A1, FR1597388 A or WO2021/165913 A.

Therefore, there is a strong need for a reduction system for an axle of a vehicle, which can solve the problems discussed above.

The object of the invention is to fulfil the aforementioned needs in an optimized and economic fashion.

### SUMMARY OF THE INVENTION

The aforesaid object is reached by a vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a schematic sectional view from the top of a vehicle provided with wheel hubs according to the invention;
- Figure 2 is a schematic sectional view of an axle provided with wheel hubs according to a first embodiment not making part of the present invention but useful for its understanding;
- Figure 3 is a sectional view of a vehicle hub comprising a first embodiment not making part of the present invention but useful for its understanding in a first operating condition;
- Figure 4 is a sectional view of a vehicle hub comprising a first embodiment not making part of the present invention but useful for its understanding in a second operating condition;
- Figure 5 is a sectional view of a vehicle hub comprising a second embodiment according to the invention in a first operating condition;
- Figure 6 is a sectional view of a vehicle hub comprising a second embodiment according to the invention in a second operating condition; and
- Figure 7 is a schematic view of a control system for the vehicle hub of figures 5 and 6.

### DETAILED DESCRIPTION OF THE INVENTION

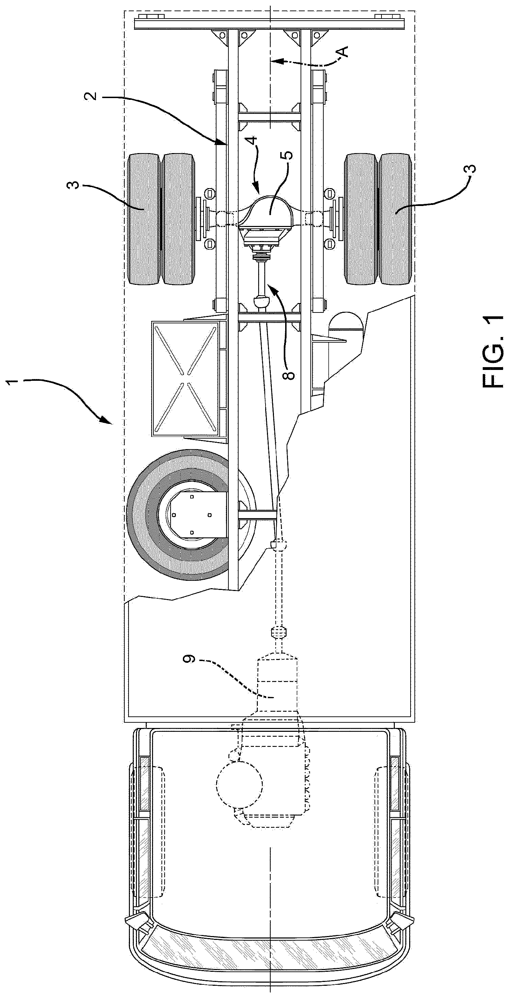

Figure 1 shows a commercial or heavy vehicle 1 comprising a frame 2 extending along a longitudinal axis A and capable of moving by means of wheels 3 carried by an axle 4.

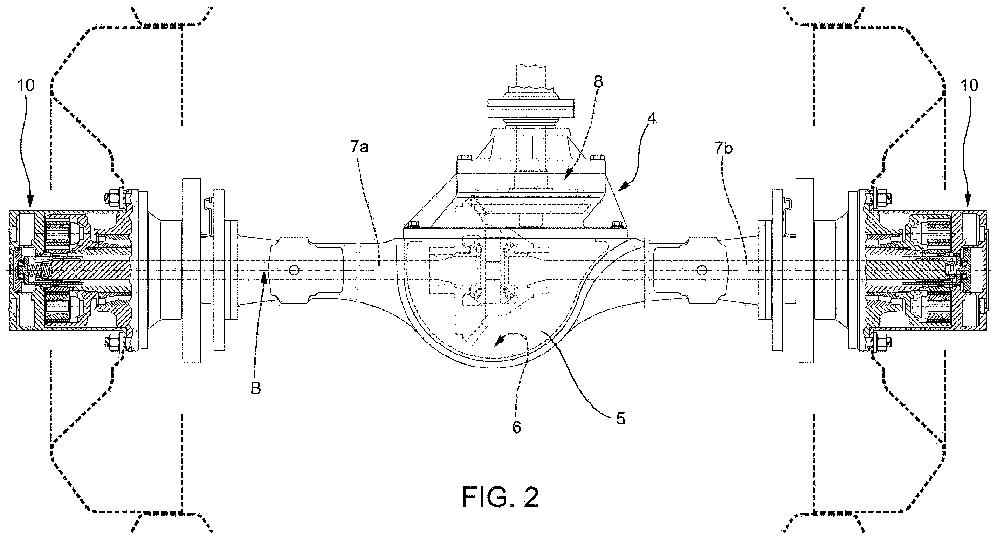

A shown in figure 2, the axle 4 comprises a carcass 5 defining a space 6 designed to at least partially accommodate a pair of axle shafts 7a, 7b extending along an B, which is transverse relative to the longitudinal axis A of the vehicle 1.

In particular, the axle shafts 7a, 7b are operatively connected, at an end of theirs, to a transmission 8 of the vehicle 1 and, on the opposite side, to respective wheel hubs 10. In the example shown herein, the transmission 8 shows a bevel gear, but it clearly could be any type of torque transmission device, such as a differential, operatively connected to a torque source 9, such as a power module, for example an internal combustion engine.

In particular, the wheel hubs 10 are carried by the carcass 5 so that they can freely rotate and are each configured to cooperate with the respective end portion of the axle shafts 7a, 7b, as described more in detail below.

As to the wheel hubs 10, for the sake of simplicity, reference will be made to only one of them, for example the right one, and the items of information provided below also apply - in the same way - to the left wheel hub, the structure described below obviously being mirror-like relative to a longitudinal axis A of the vehicle 1.

The wheel hub 10, as mentioned above, is supported in such a way that it can freely rotate relative to the carcass 5, in particular it is hollow and coaxial to the transverse axis B. In the example described herein, the wheel hub 6 is supported by means of support means 11, such as a pair of conical bearings, and by means of sealing means 8, such as O-rings.

In particular, the hub 10 comprises a main portion 10a with a substantially cylindrical shape, which is carried by the carcass 2, and an annular portion 10b, which is housed at an end portion of the carcass 5 and is carried by the main portion 10a. Advantageously, the main portion 10a and the annular portion 10b are coupled by means of known threaded means and, optionally, with the aid of further intermediate parts, which are not described in detail herein for they depend on the assembly, which is due to the type and the weight of the vehicle.

The cylindrical portion 10a defines, together with the end part of the carcass 5, a chamber 13, which is axially delimited - along the axis B - by an axial wall 6c of the main portion 10a and, on the other side, by the end part of the carcass 5; said chamber 13 is radially delimited, around the axis B, by the inner surface of the main portion 10a of the wheel hub 10.

The wheel hub 10 is operatively connected to the axle 4 by means of a reduction unit 15, which is housed inside the chamber 13 and is configured to connect the wheel hub 10 to the axle shaft 7b with several different gear ratios, namely so that the speed/torque delivered to the axle shaft 7b is different from the speed/torque delivered to the wheel hub 10.

According to both embodiments shown herein, the wheel hub 10 is provided with a reduction unit 15, which allows for two different gear ratios between the axle shaft 7b and the wheel hub 10.

In particular, the reduction unit 15 comprises a selector 16, which is coupled to the axle shaft 7b in a rotary manner and is configured to freely move on it along the axis B due to the action of actuator means 17, which are described below. The selector 16 is advantageously coupled to the axle shaft 7b by means of a grooved coupling 18, such as a splined coupling.

The reduction unit 11 further comprises a gearing 21, which is configured to cooperate with the selector 16 according to a first and a second operating condition characterized by two different gear ratios between the axle shaft 7b and the wheel hub 10.

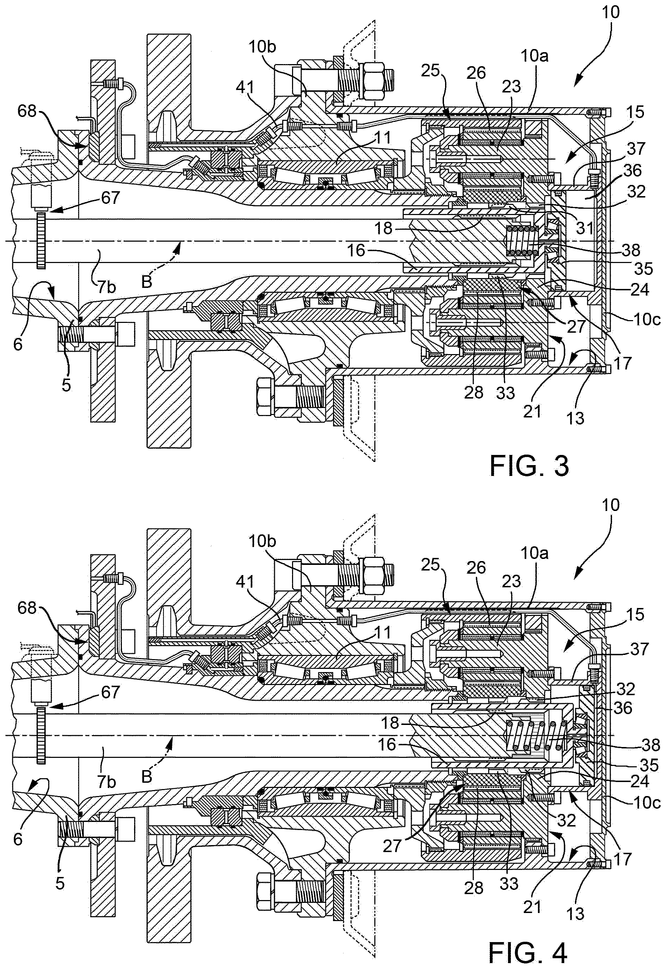

In the embodiment of figures 3 and 4, the gearing 21 is an epicyclic gearing comprising a plurality of satellites 22, which are carried by pins 23 integral to a train carrier 24 connected to the hub 10 and are configured to mesh with a portion 25 integral to the carcass 5.

In particular, the portion 25 integral to the carcass 5 is advantageously shaped like a bell open towards the chamber 13, so that it faces the axial wall 6c. The portion 25 is configured to accommodate, on the inside, the satellites 23. In particular, the portion 25 defines a toothing 26 configured to mesh with the satellites 23.

The gearing 21 further comprises a sungear 27 carried in a rotary manner between the carcass 5 and the train carrier 24 and defining a toothing 28 designed to mesh with the satellites 23.

In particular, the sungear 27 defines a toothing 31 and the train carrier 24 defines a toothing 32 configured to selectively cooperate with a toothing 33 integral to the selector 16.

The selector 16 is configured to move along the axis B so as to take on a first operating condition (figure 3), in which the toothing 33 cooperates with the toothing 32 and makes the selector 16 integral to the train carrier 24, or a second operating condition (figure 4), in which the toothing 33 cooperates with the toothing 31 and makes the selector 16 integral to the sungear 27.

The selector 16 is caused to move between the first and the second operating condition by actuator means 17, which, in the embodiment shown herein, advantageously are pneumatic actuator means.

In particular, the actuator means comprise a piston 35, which is carried, in a sliding and sealing manner, in a chamber 36 separate from the chamber 13 and is configured to cooperate in contact with the selector 16, which is free to rotate relative to it. As a consequence, the chamber 36 is divided into two portions, which are fluidly separated from one another by the piston 35.

The chamber 13 is advantageously created by a structure 37, which is integral to the train carrier 24 and connects the latter to the axial wall 6c.

The actuator means 17 described herein further comprise elastic means 38, which are configured to exert a force upon the piston 37 that is such that the latter is held in its first operating condition. In particular, the elastic means 38 comprise a helical spring accommodated between the axle shaft 7b and the selector 16.

At least a portion of the chamber 36 is fluidly connected to a source of fluid under pressure (as better described below) by means of one or more conduits 41, which are configured to allow a fluid, such as compressed air, to be injected into or let out of the chamber 36.

In the embodiment of figures 3 and 4 there is one single conduit 41, which is configured to inject a fluid into or let it out of a same portion of the chamber 36.

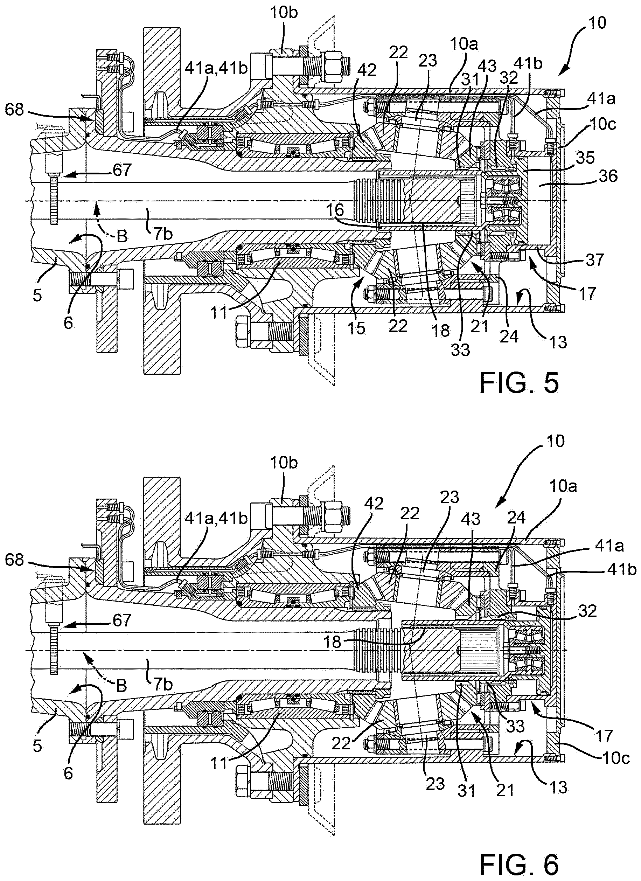

In the embodiments of figures 5 and 6, the gearing 21 is an epicyclic gearing comprising a plurality of satellites 22, which are carried by pins 23 carried, so that they can freely rotate, by a train carrier 24 connected to the wheel hub 10.

In particular, the gearing 21 comprises a pair of toothed wheels 42, 43, one carried by the carcass 5 in an integral manner and the other supported so that it can freely rotate relative to the train carrier 24. In particular, the pair of toothed wheels 42, 43 and the satellites 22 define bevel gears.

In particular, the toothed wheel carried in an idle manner relative to the train carrier 24 defines a toothing 31 and the train carrier 24 defines a toothing 32 configured to selectively cooperate with a toothing 33 integral to the selector 16. The selector 16 is configured to move along the axis B so as to take on a first operating condition (figure 6), in which the toothing 33 cooperates with the toothing 32 and makes the selector 16 integral to the train carrier 24, or a second operating condition (figure 5), in which the toothing 33 cooperates with the toothing 31 and makes the selector 16 integral to the idle toothed wheel 43.

The selector 16 is caused to move between the first and the second operating condition by actuator means 17, which, in the embodiment shown herein, advantageously are pneumatic actuator means.

In particular, the actuator means comprise a piston 35, which is carried, in a sliding and sealing manner, in a chamber 36 separate from the chamber 13 and is configured to cooperate in contact with the selector 16, which is free to rotate relative to it.

The chamber 13 is advantageously created by a structure 37, which is integral to the train carrier 24 and connects the latter to the axial wall 6c.

The chamber 36 is fluidly connected to a source of fluid under pressure by means of one or more conduits 41, which are configured to allow a fluid, such as compressed air, to be injected into or let out of the chamber 36.

Compared to the first embodiment, the conduit 41 branches off into a pair of branches 41a, 41b configured to supply air to the chamber 36 in the two portions divided, in a sealed manner, by the sleeve 35, in an alternated manner.

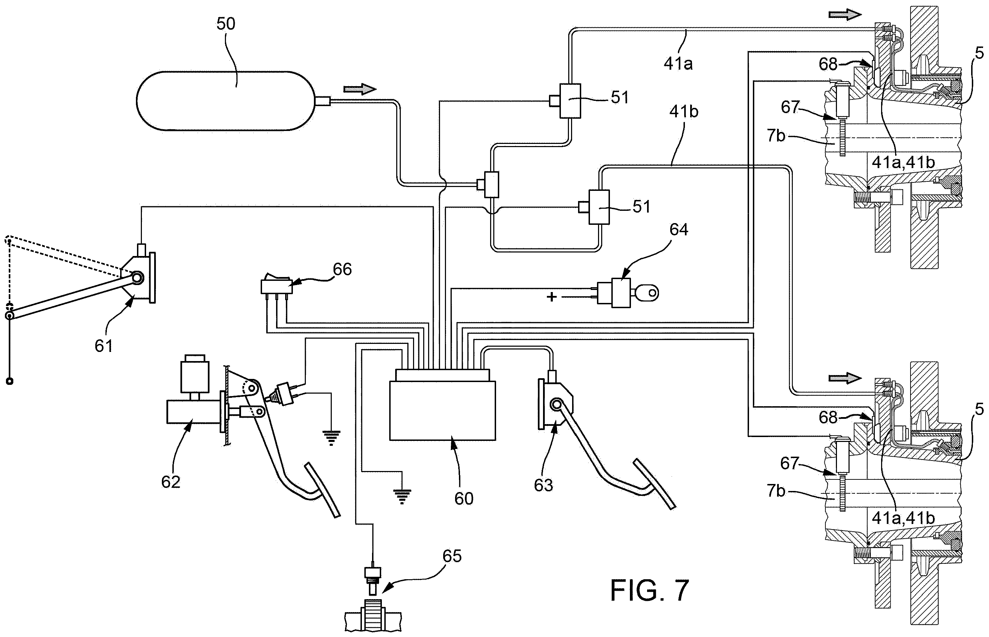

With reference to figure 7, thus to the second embodiment shown in figures 5 and 6, the vehicle 1 comprises a source of fluid under pressure 50, such as a tank of compressed air, fluidly connected to the conduits 41a, 41b, for example by means of respective valve means 51 configured to adjust the passage of air through them.

Advantageously, the vehicle 1 further comprises an electronic control unit 60 and a plurality of sensors 61-68 designed to detect quantities relating to different operating parameters of the vehicle, the control unit 60 comprises processing means electronically connected to the sensors 61-68 in order to acquire data detected by them and control, as a consequence, the passage of fluid under pressure 50 towards the conduits 41a, 41b.

In particular, the sensors 61-68 can be connected to the control unit 60 via wire or in an electromagnetic manner and the control unit 60 is configured to control the valve means 51, which advantageously are solenoid valves.

In particular, the electronic unit 60 contains stored data concerning the control of the actuator means 17. The vehicle 1 can further comprise control means (not shown) configured to change the data stored in the control unit 60 so as to change the actuation condition of the selector 16.

The sensor means preferably comprise at least some of the following sensor means:
- A load sensor 61 configured to detect the load of a suspension connecting the axle 4 to the frame 2, for example a load cell;
- A clutch sensor 62 configured to detect the opening of a control clutch of the transmission 8, for example a position sensor connected to the clutch pedal;
- An accelerator sensor 63 configured to detect the acceleration of the vehicle 1, for example a position sensor connected to the accelerator pedal;
- An ignition sensor 64 configured to detect the ignition of the vehicle 1, for example a movement sensor of the key ignition system;
- A speed sensor 65 configured to detect a rotation speed of the output shaft of the power module 9, for example a phonic wheel;
- A command sensor 66 configured to detect the activation of the possibility of changing the ratio of the wheel hub, for example a button or an icon on a display;
- A speed sensor 67 configured to detect a rotation speed of the axle 4, hence of the axle shafts 7a, 7b, such as a phonic wheel or an encoder; and
- A speed sensor 68 configured to detect a speed of the wheel hub 10, such as an ABS sensor of the phonic wheel of encoder kind.

The operation of the embodiment of figures 3 and 4 will now be described, assuming that the operating condition of figure 4 occurs.

In this operating condition, the conduit 41 does not introduce air, the piston 35 is maintained adjacent to the axis wall 6c by the elastic means 38. In this condition, the teeth 33 of the actuator 16 mesh with the teeth 32 of the train carrier 24. In this way, the wheel hub 10, which is integral to the train carrier 24, is caused to rotate by the axle shaft 7b at the same speed as the latter.

In case it is needed, the compressed air is caused flow from the conduit 41 to the chamber 36 moving the piston 35 and shifting it to the condition of figure 4, namely on the opposite side relative to the axial wall 10c, and compressing the elastic means 38. Here, the teeth 33 of the actuator 16 mesh with the teeth 31 of the sungear 27. In this way, torque is delivered to the satellites 22, which mesh with the element 25 and drag the pins 23, which are integral to the train carrier 24. Hence, the latter causes the rotation of the wheel hub 10. In this condition, the torque delivered to the wheel hub 10 clearly is greater, even if at a lower speed.

In case a shift to the condition of figure 3 is needed, pressure has to be released, through the conduit 41 or valve means provided in the wheel hub 10, from the chamber 36 so that the piston 35 is moved back by the elastic means 38 to the first operating condition described above.

The operation of the embodiment of figures 5 and 6 will now be described, assuming that the operating condition of figure 6 occurs.

In this operating condition, the conduit 41b introduces air and the piston 35 is maintained adjacent to the axis wall 6c. In this condition, the teeth 33 of the actuator 16 mesh with the teeth 32 of the train carrier 24. In this way, the wheel hub 10, which is integral to the train carrier 24, is caused to rotate by the axle shaft 7b at the same speed as the latter.

In case it is needed, the compressed air is caused to flow through the conduit 41a, letting the air out of the other portion of chamber 36 through the conduit 41b or respective valve means. In this way, the piston 35 is moved to the condition of figure 5, namely on the opposite side relative to the axial wall. Here, the teeth 33 of the actuator 16 mesh with the teeth 31 of the toothed wheel 43, which meshes with the satellites 22 and the other toothed wheel 42. Hence, the satellites 22 are caused to rotate and drag the train carrier 24, which drags the wheel hub 10. In this condition, the torque delivered to the wheel hub 10 clearly is greater, even if at a lower speed.

In case a shift to the condition of figure 6 is needed, the insertion and the release of the compressed fluid into and from the chamber 36 though the conduits 41a, 41b has to be reversed, thus moving the piston 35 to the initial position.

According to the description above, the invention also relates to a method for controlling a wheel hub provided with a reduction unit 15 of the type described above.

Said method basically comprises the following steps of:
- Detecting a plurality of physical quantities relating to operating parameters of the vehicle 1;
- Processing these detected physical quantities in order to identify a vehicle load condition;
- Checking whether the vehicle load condition complies with the reduction ratio of the wheel hub 10;
- If it complies, the ratio is maintained, otherwise the actuator means 17 are controlled so as to shift to a different reduction ratio.

In particular, the control of the actuator means 17 comprises sending a control signal to said valve means 51.

In particular, the method described above can be stored and processed in the control unit 60 described above and the detected physical quantities can be some of the quantities detected by the sensor means 61-68.

The check concerning the vehicle load condition can be carried out through a check of the detected quantities relative to physical quantities stored in the control unit 60, for example by means of lookup tables (LUT) deriving from specific experimental tests for the special type of vehicle.

Otherwise, the aforesaid check can be carried out by means of a comparison relative to value deriving from mathematical interpolation among said physical quantities.

Owing to the above, the advantages of vehicle according to the invention are evident.

Thanks to this system, a reduction system is provided, which is integrated in a wheel hub, is versatile, compact and economic as well as easy to be mounted and subjected to maintenance compared to known systems.

Thanks to the additional reduction system and to the reduction range that can be optimized depending on the type and size of the vehicle, fuel consumptions as well as pollutant emissions can be reduced.

In particular, the use of a gearing integrated in the wheel hub allows manufacturers to obtain high transmission ratios through a sturdy gear, which is suited for the large loads of an axle of a heavy vehicle.

Furthermore, the presence of two conduits, which selectively inject air into two portion of the chamber of the actuator means, activates the reduction ratio shift in a quicker and more controlled manner. In particular, said shift can be controlled during the movement of the vehicle.

Indeed, thanks to the control method described herein, the shift can take place in the reduction 15 when the vehicle is moving, avoiding scraping between the selector 16 and the toothings 31, 32.

The control can be automated and stored in the electronic unit and the control variables can previously be stored or can be changed by the driver.

Finally, the vehicle according to the invention can be subjected to changes and variants, which, though, do not go beyond the scope of protection set forth in the appended claims.

Obviously, as mentioned above, the carcass 4 and the wheel hub 10 can have different shapes and consist of more and different pieces.

In addition, the gears described above could change and there could be elements that are not described herein, but are known when dealing with the assembly of an axle according to the invention.

The description above relates to an air actuation, which is deemed to be the most effective and economic one.

Furthermore, the method disclosed herein could comprise different ways to check for the condition of engagement of the gears between wheel hub and axle shafts, as mentioned above, through checks of limit values deriving from mathematical interpolations or table relationships.

Finally, the two embodiments of the invention can be combined together and the presence of the elastic means would support the pressing force provided in the chamber 36 by an actuation system 17 provided with two conduits.

## Claims

1. Vehicle (1) comprising a frame (2), a power module (9), a transmission (8) and at least one axle (4), said axle (4) comprising:
- a carcass (5) defining a space (6) along an axis (B);
- a pair of shafts (7a, 7b) housed at least partially in said space (6) and comprising respective internal ends cooperating with said transmission (8) of said vehicle (1) configured to supply a driving torque to said shafts (7a, 7b);
- respective wheel hubs (10) carried in a rotationally free manner by said carcass (5),
each wheel hub (10) comprising:
- a hollow portion (10a) carried in a rotationally free manner on said carcass (5) around an axis (B) of the latter, said hollow portion (10a) defining a chamber (13) between its inner wall and said carcass (5),
- a reduction unit (15) housed inside said chamber (13) and configured to vary the torque transmitted by one of said shafts (7a, 7b) of said axle (4) and said wheel hub (10), said reduction unit (15) comprising a gearing (21),
- a selector (16) rotationally coupled to said shaft (7a, 7b) of said axle (4) and free to move on it along said axis (B),
- actuator means (17) configured to control the position of said selector (16) along said axis (B),
said gearing (15) comprising a carrier (24) integral with said hollow portion (10a) and a plurality of satellites (22) meshing between said carcass (5) of said axle (4) and said carrier (24),
said selector (16) defining a toothing (33) configured to selectively mesh with a first toothing (32) integral with said carrier (24) and a second toothing (31) operatively connected to said satellites (22) according to the position of said selector (16) along said axis (B),
wherein said actuator means (17) are pneumatic and comprise a chamber (36) in which a piston (35) is free to slide and seal so as to divide said chamber (36) in two portions fluidically separated from each other,
said vehicle (1) comprising a source of pressurized fluid (50),
**characterized in that** said source of pressurized fluid is fluidically connected through a pair of ducts (41a, 41b) with said actuator means (17) and said vehicle further comprises valve means (51) fluidically interposed on said pair of ducts (41a, 41b) for regulating the passage of fluid under pressure therein,
both said portions being fluidically connected to said source (50) via said pair of ducts (41a, 41b),
wherein said vehicle (1) comprises a control unit (60) and a plurality of sensor means (61-68) configured to detect physical quantities relating to operational conditions of said vehicle (1), said control unit (60) comprising processing means electrically connected to said sensor means (61-68) for acquiring the data detected by them, processing them and consequently controlling said valve means (51) as a function of data relating to said operational conditions stored in said processing means.

2. Vehicle according to claim 1, wherein said gearing (21) comprises a sungear (27) defining said second toothing (31), said sungear (27) being rotationally free between said carcass (5) and said train carrier (24).

3. Vehicle according to claim 2, wherein said satellites (22) mesh with respect to said sungear (27) and a toothing (28) made on a portion (25) fixed with respect to said carcass (5).

4. Vehicle according to claim 3, wherein said portion (25) defines a space housing said satellites (22) inside it.

5. Vehicle according to claim 1, wherein said gearing (21) comprises a toothed wheel (43) defining said second toothing (31), said toothed wheel (43) being rotationally free on said train carrier (24).

6. Vehicle according to claim 5, wherein said gearing (21) comprises a further toothed wheel (42) integral with said carcass (5), said satellites (22) meshing with said toothed wheels (42, 43).

7. Vehicle according to claim 6, wherein said toothed wheels (42, 43) and said satellites (22) define a bevel gear.

8. Vehicle according to any of the preceding claims, in which said chamber (36) is defined by a structure (37) integral with said train carrier (24).

9. Vehicle according to any of the preceding claims, comprising control means configured to vary the data stored in said electronic unit (60) relating to said operating quantities.

10. Vehicle according to any of the preceding claims, comprising at least some of the following sensor means (61-68):
• A load sensor (61) configured to detect the load of a suspension connecting said axle (4) to said frame;
• A clutch sensor (62) configured to detect the opening of a control clutch of said transmission (8);
• An accelerator sensor (63) configured to detect the acceleration of said vehicle (1);
• An ignition sensor (64) configured to detect the ignition of said vehicle (1);
• A speed sensor (65) configured to detect a rotation speed of an output shaft of said power module (9);
• A command sensor (66) configured to detect the activation of the possibility of varying the ratio of said wheel hub (10)
• A speed sensor (67) configured to detect the speed of said shafts (7a, 7b); And
• A speed sensor (68), configured to detect a speed of said wheel hub (10).

11. Method for controlling a wheel hub (10) in a vehicle according to claim 10, comprising the following steps:
• detecting a plurality of physical quantities relating to operating parameters of said vehicle (1);
• Process these physical quantities detected to identify a vehicular load condition;
• Check whether the vehicle load condition is in compliance with the reduction ratio of said wheel hub (10);
• If it conforms, said ratio is maintained, otherwise said actuator means (17) are controlled to pass to a different reduction ratio.

12. Method according to claim 11, wherein said control of said actuator means (17) comprises sending a signal to control said valve means (51).

13. Method according to claim 11 or 12, wherein said verification of vehicle load condition comprises comparison with values stored in said control unit (60) and/or comparison with respect to a calculation through mathematical interpolation of said physical quantities.

## Patentansprüche

1. Fahrzeug (1), umfassend einen Rahmen (2), ein Antriebsmodul (9), ein Getriebe (8) und zumindest eine Achse (4), wobei die Achse (4) umfasst:
- eine Hülle (5), die einen Raum (6) entlang einer Achse (B) begrenzt;
- ein Paar Wellen (7a, 7b), die zumindest teilweise in dem Raum (6) untergebracht sind und die jeweils innere Enden umfassen, die mit dem Getriebe (8) des Fahrzeugs (1) zusammenwirken, wobei das Paar Wellen (7a, 7b) konfiguriert ist, um ein Antriebsmoment an die Wellen (7a, 7b) zu übertragen;
- jeweilige Radnaben (10), die frei drehbar durch die Hülle (5) gelagert sind, wobei jede Radnabe (10) umfasst:
- einen hohlen Abschnitt (10a), der an der Hülle (5) um eine Achse (B) derselben frei drehbar gelagert ist, wobei der hohle Abschnitt (10a) eine Kammer (13) zwischen seiner inneren Wand und der Hülle (5) begrenzt,
- eine Untersetzungseinheit (15), die in der Kammer (13) untergebracht ist und konfiguriert ist, um das Drehmoment, das von einer der Wellen (7a, 7b) der Achse (4) und der Radnabe (10) übertragen wird, zu variieren, wobei die Untersetzungseinheit (15) ein Getriebe (21) umfasst,
- einen Wähler (16), der drehbar mit der Welle (7a, 7b) der Achse (4) gekoppelt ist und sich entlang der Achse (B) auf dieser frei bewegen kann,
- Betätigungsmittel (17), die konfiguriert sind, die Position des Wählers (16) entlang der Achse (B) zu steuern,
wobei das Getriebe (15) einen Träger (24), der fest mit dem hohlen Abschnitt (10a) verbunden ist, und eine Vielzahl von Satelliten (22), die zwischen der Hülle (5) der Achse (4) und dem Träger (24) eingreifen, umfasst,
wobei der Wähler (16) eine Verzahnung (33) definiert, die konfiguriert ist, um selektiv mit einer ersten Verzahnung (32), die fest mit dem Träger (24) verbunden ist, und einer zweiten Verzahnung (31), die mit den Satelliten (22) wirkverbunden ist, je nach Position des Wählers (16) entlang der Achse (B) einzugreifen,
wobei die Betätigungsmittel (17) pneumatisch sind und eine Kammer (36) umfassen, in der ein Kolben (35) frei gleiten und abdichten kann, sodass die Kammer (36) in zwei fluidisch voneinander getrennte Abschnitte unterteilt wird,
wobei das Fahrzeug (1) eine Quelle für Druckfluid (50) umfasst,
**dadurch gekennzeichnet, dass** die Quelle für Druckflüssigkeit fluidisch über ein Paar Leitungen (41a, 41b) mit den Betätigungsmitteln (17) verbunden ist und das Fahrzeug ferner Ventilmittel (51) umfasst, die fluidisch in die Leitungen (41a, 41b) zwischengeschaltet sind, um den Durchgang von Druckfluid darin zu regulieren,
wobei die beiden Abschnitte fluidisch mit der Quelle (50) über das Paar Leitungen (41a, 41b) verbunden sind,
wobei das Fahrzeug (1) eine Steuereinheit (60) und eine Vielzahl von Sensormitteln (61-68) umfasst, die konfiguriert sind, physikalische Größen in Bezug auf Betriebsbedingungen des Fahrzeugs (1) zu erfassen,
wobei die Steuereinheit (60) Verarbeitungsmittel umfasst, die elektrisch mit den Sensormitteln (61-68) verbunden sind, um die von ihnen erfassten Daten zu erfassen, diese zu verarbeiten und folglich die Ventilmittel (51) in Abhängigkeit von Daten, die den in den Verarbeitungsmitteln gespeicherten Betriebsbedingungen entsprechen, zu steuern.

2. Fahrzeug gemäß Anspruch 1, wobei das Getriebe (21) ein Sonnenrad (27) umfasst, das die zweite Verzahnung (31) definiert, wobei das Sonnenrad (27) zwischen der Hülle (5) und dem Träger (24) drehbar gelagert ist.

3. Fahrzeug gemäß Anspruch 2, wobei die Satelliten (22) mit dem Sonnenrad (27) und einer Verzahnung (28), die an einem Abschnitt (25), der fest mit der Hülle (5) verbunden ist, angebracht ist, in Eingriff stehen.

4. Fahrzeug gemäß Anspruch 3, wobei der Abschnitt (25) einen Raum definiert, in dem die Satelliten (22) untergebracht sind.

5. Fahrzeug gemäß Anspruch 1, wobei das Getriebe (21) ein Zahnrad (43) umfasst, das die zweite Verzahnung (31) definiert, wobei das Zahnrad (43) frei drehbar auf dem Träger (24) gelagert ist.

6. Fahrzeug gemäß Anspruch 5, wobei das Getriebe (21) ein weiteres Zahnrad (42) umfasst, das fest mit der Hülle (5) verbunden ist, wobei die Satelliten (22) mit den Zahnrädern (42, 43) in Eingriff stehen.

7. Fahrzeug gemäß Anspruch 6, wobei die Zahnräder (42, 43) und die Satelliten (22) ein Kegelradgetriebe bilden.

8. Fahrzeug nach einem der vorhergehenden Ansprüche, bei dem die Kammer (36) durch eine Struktur (37) definiert ist, die fest mit dem Träger (24) verbunden ist.

9. Fahrzeug nach einem der vorhergehenden Ansprüche, umfassend Steuerungsmittel, die konfiguriert sind, um die in der elektronischen Einheit (60) gespeicherten Daten, die den Betriebsgrößen entsprechen, zu ändern.

10. Fahrzeug nach einem der vorhergehenden Ansprüche, umfassend zumindest einige der folgenden Sensormittel (61-68):
- ein Lastsensor (61), der konfiguriert ist, die Last einer Aufhängung zu erfassen, die die Achse (4) mit dem Rahmen verbindet;
- ein Kupplungssensor (62), der konfiguriert ist, die Öffnung einer Steuerkupplung des Getriebes (8) zu erfassen;
- ein Beschleunigungssensor (63), der konfiguriert ist, die Beschleunigung des Fahrzeugs (1) zu erfassen;
- ein Zündsensor (64), der konfiguriert ist, das Zünden des Fahrzeugs (1) zu erfassen;
- ein Geschwindigkeitssensor (65), der konfiguriert ist, die Drehzahl einer Abtriebswelle des Antriebsmoduls (9) zu erfassen;
- ein Befehlssensor (66), der konfiguriert ist, die Aktivierung der Möglichkeit zur Änderung des Übersetzungsverhältnisses der Radnabe (10) zu erfassen;
- ein Geschwindigkeitssensor (67), der konfiguriert ist, die Geschwindigkeit der Wellen (7a, 7b) zu erfassen; und
- ein Geschwindigkeitssensor (68), der konfiguriert ist, die Geschwindigkeit der Radnabe (10) zu erfassen.

11. Verfahren zum Steuern einer Radnabe (10) in einem Fahrzeug gemäß Anspruch 10, umfassend die folgenden Schritte:
- Erfassen einer Vielzahl physikalischer Größen, die Betriebsparametern des Fahrzeugs (1) entsprechen;
- Verarbeiten dieser erfassten physikalischen Größen zum Identifizieren eines Fahrzeugbelastungszustands;
- Überprüfen, ob der Fahrzeugbelastungszustand mit dem Übersetzungsverhältnis der Radnabe (10) übereinstimmt;
- Falls es übereinstimmt, wird das Verhältnis beibehalten, andernfalls werden die Betätigungsmittel (17) gesteuert, um auf ein anderes Übersetzungsverhältnis zu wechseln.

12. Verfahren nach Anspruch 11, wobei das Steuern der Betätigungsmittel (17) ein Senden eines Signals zum Steuern der Ventilmittel (51) umfasst.

13. Verfahren nach Anspruch 1 oder 12, bei dem das Überprüfen des Fahrzeugbelastungszustands ein Vergleichen mit in der Steuereinheit (60) gespeicherten Werten und/oder ein Vergleichen mit einer Berechnung durch mathematische Interpolation der physikalischen Größen umfasst.

## Revendications

1. Véhicule (1) comprenant un châssis (2), un module de puissance (9), une transmission (8) et au moins un essieu (4), ledit essieu (4) comprenant :
une carcasse (5) définissant un espace (6) le long d'un axe (B) ;
une paire d'arbres (7a, 7b) logés au moins partiellement dans ledit espace (6) et comprenant des extrémités internes respectives coopérant avec ladite transmission (8) dudit véhicule (1) configuré pour fournir un couple moteur auxdits arbres (7a, 7b)
des moyeux de roue (10) respectifs portés d'une manière libre en rotation par ladite carcasse (5),
chaque moyeu de roue (10) comprenant :
une partie creuse (10a) portée d'une manière libre en rotation sur ladite carcasse (5) autour d'un axe (B) de cette dernière,
ladite partie creuse (10a) définissant une chambre (13) entre sa paroi interne et ladite carcasse (5),
une unité de réduction (15) logée à l'intérieur de ladite chambre (13) et configurée pour modifier le couple transmis par l'un desdits arbres (7a, 7b) dudit essieu (4) et ledit moyeu de roue (10), ladite unité de réduction (15) comprenant un engrenage (21),
un sélecteur (16) couplé, en rotation, audit arbre (7a, 7b) dudit essieu (4) et libre de se déplacer sur ce dernier le long dudit axe (B),
des moyens d'actionneur (17) configurés pour contrôler la position dudit sélecteur (16) le long dudit axe (B),
ledit engrenage (15) comprenant un porte-satellites (24) solidaire avec ladite partie creuse (10a) et une pluralité de satellites (22) s'engrenant entre ladite carcasse (5) dudit essieu (4) et ledit porte-satellites (24),
ledit sélecteur (16) définissant une denture (33) configurée pour s'engrener sélectivement avec une première denture (32) solidaire avec ledit porte-satellites (24) et une seconde denture (31) raccordée, de manière opérationnelle, auxdits satellites (22) selon la position dudit sélecteur (16) le long dudit axe (B),
dans lequel lesdits moyens d'actionneur (17) sont pneumatiques et comprennent une chambre (36) dans laquelle un piston (35) est libre de coulisser et de réaliser l'étanchéité afin de diviser ladite chambre (36) en deux parties séparées de manière fluidique l'une par rapport à l'autre,
ledit véhicule (1) comprenant une source de fluide sous pression (50), **caractérisé en ce que** ladite source de fluide sous pression est raccordée, de manière fluidique, par le biais d'une paire de conduits (41a, 41b) avec lesdits moyens d'actionneur (17) et ledit véhicule comprend en outre des moyens de valve (51) intercalés, de manière fluidique, sur ladite paire de conduits (41a, 41b) pour réguler le passage du fluide sous pression dans ces derniers, deux desdites parties étant raccordées, de manière fluidique, à ladite source (50) via ladite paire de conduits (41a, 41b),
dans lequel ledit véhicule (1) comprend une unité de contrôle (60) et une pluralité de moyens de capteur (61 - 68) configurés pour détecter des quantités physiques relatives aux conditions de fonctionnement dudit véhicule (1), ladite unité de contrôle (60) comprenant des moyens de traitement électriquement raccordés auxdits moyens de capteur (61 - 68) pour acquérir les données détectées par ces derniers, les traiter et ensuite commander lesdits moyens de valve (51) en fonction des données relatives auxdites conditions de fonctionnement mémorisées dans lesdits moyens de traitement.

2. Véhicule selon la revendication 1, dans lequel ledit engrenage (21) comprend un planétaire (27) définissant ladite seconde denture (31), ledit planétaire (27) étant libre en rotation entre ladite carcasse (5) et ledit porte-satellites (24).

3. Véhicule selon la revendication 2, dans lequel lesdits satellites (22) s'engrènent par rapport audit planétaire (27) et à une denture (28) réalisée sur une partie (25) fixe par rapport à ladite carcasse (5).

4. Véhicule selon la revendication 3, dans lequel ladite partie (25) définit un espace logeant lesdits satellites (22) à l'intérieur de ce dernier.

5. Véhicule selon la revendication 1, dans lequel ledit engrenage (21) comprend une roue dentée (43) définissant ladite seconde denture (31), ladite roue dentée (43) étant libre en rotation sur ledit porte-satellites (24).

6. Véhicule selon la revendication 5, dans lequel ledit engrenage (21) comprend une autre roue dentée (42) solidaire avec ladite carcasse (5), lesdits satellites (22) s'engrenant avec lesdites roues dentées (42, 43).

7. Véhicule selon la revendication 6, dans lequel lesdites roues dentées (42, 43) et lesdits satellites (22) définissent un engrenage conique.

8. Véhicule selon l'une quelconque des revendications précédentes, dans lequel ladite chambre (36) est définie par une structure (37) solidaire avec ledit porte-satellites (24).

9. Véhicule selon l'une quelconque des revendications précédentes, comprenant des moyens de contrôle configurés pour modifier les données mémorisées dans ladite unité électronique (60) relatives auxdites quantités de fonctionnement.

10. Véhicule selon l'une quelconque des revendications précédentes, comprenant au moins certains des moyens de capteur (61 - 68) suivants :
un capteur de charge (61) configuré pour détecter la charge d'une suspension raccordant ledit essieu (4) audit châssis ;
un capteur d'embrayage (62) configuré pour détecter l'ouverture d'un embrayage de commande de ladite transmission (8) ;
un capteur d'accélérateur (63) configuré pour détecter l'accélération dudit véhicule (1) ;
un capteur d'allumage (64) configuré pour détecter l'allumage dudit véhicule (1) ;
un capteur de vitesse (65) configuré pour détecter une vitesse de rotation d'un arbre de sortie dudit module de puissance (9) ;
un capteur de commande (66) configuré pour détecter l'activation de la possibilité de modifier le rapport dudit moyeu de roue (10) ;
un capteur de vitesse (67) configuré pour détecter la vitesse desdits arbres (7a, 7b) ; et
un capteur de vitesse (68) configuré pour détecter une vitesse dudit moyeu de roue (10).

11. Procédé pour contrôler un moyeu de roue (10) dans un véhicule selon la revendication 10, comprenant les étapes suivantes :
détecter une pluralité de quantités physiques relatives aux paramètres de fonctionnement dudit véhicule (1) ;
traiter ces quantités physiques détectées pour identifier une condition de charge de véhicule ;
vérifier si la condition de charge de véhicule est en conformité avec le rapport de réduction dudit moyeu de roue (10) ;
si elle est conforme, ledit rapport est maintenu, sinon lesdits moyens d'actionneur (17) sont contrôlés pour passer à un rapport de réduction différent.

12. Procédé selon la revendication 11, dans lequel ledit contrôle desdits moyens d'actionneur (17) comprend l'étape pour envoyer un signal afin de contrôler lesdits moyens de valve (51).

13. Procédé selon la revendication 11 ou 12, dans lequel ladite vérification de la condition de charge de véhicule comprend la comparaison avec des valeurs mémorisées dans ladite unité de contrôle (60) et/ou la comparaison par rapport à un calcul par le biais de l'interpolation mathématique desdites quantités physiques.
